(19) Europäisches Patentamt
European Patent Office
Office européen des brevets

(11) Publication number: **0 252 189 B1**

(12) # EUROPEAN PATENT SPECIFICATION

(45) Date of publication of patent specification: **16.09.92**

(51) Int. Cl.5: **H01M 4/82**, H01M 4/74, //B21H7/00

(21) Application number: **86304330.3**

(22) Date of filing: **06.06.86**

(54) **Process for producing a grid for use in lead acid batteries.**

(43) Date of publication of application:
**13.01.88 Bulletin 88/02**

(45) Publication of the grant of the patent:
**16.09.92 Bulletin 92/38**

(84) Designated Contracting States:
**DE FR GB**

(56) References cited:
**WO-A-86/03343**
**US-A- 4 279 977**

**PATENT ABSTRACTS OF JAPAN, vol. 10, no. 179 (E-414)[2235], 24th June 1986; & JP-A-61 27 066 (MATSUSHITA ELECTRIC IND. CO., LTD) 06-02-1986**

**PATENT ABSTRACTS OF JAPAN, vol. 9, no. 216 (E-340)[1939], 3rd September 1985; & JP-A-60 77 359 (MATSUSHITA DENKI SANGYO K.K.) 01-05-1985**

**PATENT ABSTRACTS OF JAPAN, vol. 9, no. 248 (E-347)[1971], 4th October 1985; & JP-A-60 97 552 (YUASA DENCHI K.K.) 31-05-1985**

(73) Proprietor: **MATSUSHITA ELECTRIC INDUSTRIAL CO., LTD.**
**1006, Oaza Kadoma**
**Kadoma-shi, Osaka-fu, 571(JP)**

(72) Inventor: **Yasuda, Hiroshi**
**Kopo Hakamata 505 1687-1, Nakanogo Araicho**
**Hamana-gun Shizuoka-ken(JP)**
Inventor: **Furuya, Sadao**
**248-7, Aza Oyama**
**Higashimiyukicho Toyohashi-shi(JP)**
Inventor: **Hoshihara, Naoto**
**Kopo Hakamata 503 1687-1, Nakanogo Araicho**
**Hamana-gun Shizuoka-ken(JP)**
Inventor: **Yamaguchi, Takashi**
**1198-5, Ota**
**Kosai-shi(JP)**
Inventor: **Takahashi, Katsuhiro**
**67-1 Hashirahachibancho**
**Toyohashi-shi(JP)**
Inventor: **Ishii, Teruaki**
**San Haitsu 101 1116-337, Okazaki**
**Kosai-shi(JP)**

**EP 0 252 189 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**PATENT ABSTRACTS OF JAPAN**, vol. 10, no. 251 (E-432)[2307], 28th August 1986; & JP-A-61 80 756 (MATSUSHITA ELECTRIC IND. CO., LTD) 24-04-1986

**PATENT ABSTRACTS OF JAPAN**, vol. 7, no. 284 (E-217)[1429], 17th December 1983; & JP-A-58 163 155 (YUASA DENCHI K.K.) 27-09-1983

**PATENT ABSTRACTS OF JAPAN**, vol. 10, no. 313 (E-448)[2369], 24th October 1986; & JP-A-61 124 064 (MATSUSHITA ELECTRIC IND. CO., LTD) 11-06-1986

(74) Representative: **Smith, Norman Ian et al**
**F.J. CLEVELAND & COMPANY 40-43 Chancery Lane**
**London WC2A 1JO(GB)**

## Description

The present invention relates to a lead acid batteries for use in electric source for automobiles and other fields, and more particularly to a process for producing a grid for use in lead acid batteries.

Curently, there is an increasing tendency to use a lead-calcium alloy as the grid for lead acid batteries because of its excellent characteristic properties, i.e. the small loss in electrolytic solution after assemblage of battery and the slight self-discharge during storage.

As compared with the lead-antimony alloy which has been used prior to lead-calcium alloy, however, lead-calcium alloy is inferior in castability and mechanical strength after casting. For these reasons, it has hitherto been conventional to form a lead-calcium alloy into a grid by rolling its ingot into a sheet and then subjecting the sheet to an expanding treatment.

When an acid battery using such a grid of lead-calcium alloy is left standing for a long period of time in a discharged state, a high resistance substance is formed at the interface between the positive electrode and the active material and this high resistance substance makes the next charging procedure impossible.

An object of the present invention is to provide a process for producing a grid for use in lead acid batteries with which the above-mentioned problem can be solved.

According to a first aspect of the present invention there is provided a process for producing a grid for use in lead acid batteries which comprises superposing a sheet or a foil of a lead alloy on a sheet bar composed of a lead-calcium alloy containing 0.03 to 0.15% by weight of calcium, 0 to 1.5% by weight of tin and a residual quantity of lead, said sheet or foil of lead alloy having a tin concentration in the range of 1.5 to 30% by weight and a tin concentration which is higher than the tin concentration of said sheet bar, said sheet or foil also having a thickness thinner than that of said sheet bar, and no greater than 0.7 mm, followed by integrating both materials by a cold rolling process at a temperature not higher than the recrystallisation temperature of the alloy to form an elementary sheet having a thickness which is at most 1/5 of the thickness of the sheet bar and the sheet or foil before rolling and then subjecting the elementary sheet to an expanding or punching processing to form a grid.

According to a second aspect of the present invention there is provided a process for producing a grid for use in lead acid batteries which comprises superposing a sheet or a foil of a lead alloy having a composition different from that of the sheet bar and a tin concentration higher than that of said sheet bar, and having a thickness thinner than that of the sheet bar, and no greater than 0.7 mm followed by integrating the two materials by a cold rolling process at a temperature not higher than the recrystallisation temperature of the alloy to form an elementary sheet of which the thickness after rolling is at most 1/5 of the total thickness of the sheet bar and the sheet or foil before rolling, and then subjecting the elementary sheet to an expanding or punching processing to form a grid.

According to a third aspect of the present invention there is provided a process for producing a grid for use in lead acid batteries which comprises superposing a sheet or a foil of a lead-tin alloy having a thickness no greater than 0.7 mm and containing about 5% by weight of tin on a sheet bar composed of about 0.07% by weight of calcium, 0.25% about by weight of tin and a residual major quantity of lead, followed by integrating the two materials by a cold rolling process at a temperature not higher than the recrystallisation temperature of the alloy to form an elementary sheet of which the thickness after rolling is at most 1/5 of the total thickness of the sheet bar and the sheet or foil before rolling, and then subjecting the elementary sheet to an expanding processing to form a grid.

It has been found that the formation of the high resistance substance at the interface between the positive electrode grid and the active material filled therein can effectively be prevented by adjusting the quantity (content) of tin in the lead-calcium alloy to 1.5% by weight (hereinafter, simply referred to as "%"). However, tin is more expensive than lead as an elementary material, so that it is undesirable from the viewpoint of industrial mass production to add as large an amount as 1.5% or more of tin into the grid alloy because it makes the over-all cost of the grid alloy too high.

Thus, there have hitherto been devised various means for enhancing the concentration (content) of tin only in the interfacial part of grid making contact with active material. According to the present invention, a lead alloy sheet having a high tin content in its superficial part is produced by the so-called cladding process which comprises superposing a lead-tin alloy having a smaller thickness than that of sheet bar on a sheet bar of lead-calcium alloy and subjecting the superposed materials to a cold rolling. Generally saying, cladding process is effective for achieving a high bonding strength if combined with a heat treatment such as hot rolling process. The present inventors also found that hot rolling process which comprises heating a sheet bar of lead alloy to a temperature higher than its recrystallization temperature, superposing a lead-tin alloy on the heated sheet bar and rolling the superposed materials is effective for enhancing the bonding strength between the two layers. However, there is a tendency that, according to this method, the lead sheet cannot exhibit a sufficient time-hardening effect so that tensile strength becomes low. In view of above, the present inventors have studied the optimum conditions of cladding on the premise that a sheet bar of lead alloy is subjected to cold rolling at a temperature not higher than the recrystallization temperature of the alloy. As the result, it has been found that a clad sheet having a bonding strength enough to endure the expanding process can be produced by making the thickness of the lead-tin alloy superposed on the sheet bar as small as 0.7 mm or less and adjusting the rolling ratio (the ratio of thickness of elementary material before rolling to the thickness of rolled sheet) to a value of 5 or more. According to this process, a high strength of sheet and a high bonding strength at the bonded surface can both be achieved simultaneously. Further, its procedure is so simple that a mere pressure bonding of different metals is enough for the purpose. Further the clad material has a high dimensional accuracy regarding thickness, and the process is accompanied with no material loss. The expanded grid obtained by this process has a predetermined thickness of a tin-rich layer containing a predetermined concentration of tin on its surface.

An embodiment of the invention will be described now by way of example only with reference to the accompanying drawings. In the drawings:

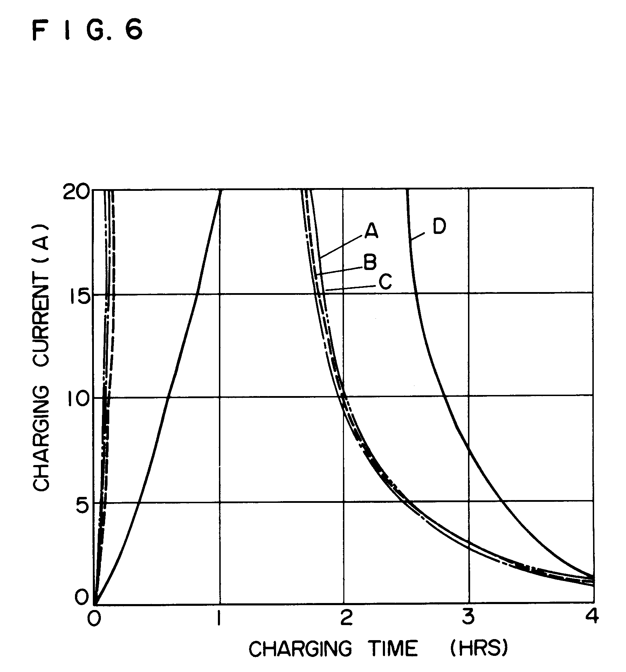

Figure 1 is an schematic illustration of the process for producing the ribbon-like sheet-formed elementary material used for the production of the grid of the invention. Figure 2 is an enlarged sectional view of said sheet-formed elementary material. Figure 3 is a top view of the sheet-formed material having been subjected to expanding process. Figure 4 is a top view of the grid cut out from the expanded sheet. Figure 5 is an enlarged sectional view of the skeletal part of the grid. Figure 6 is a graph illustrating the charging characteristics or an acid battery using the grid of the invention which has been left standing in a superdischarged state.

Hereunder, examples of the invention will be mentioned.

As shown in Figure 1, a sheet bar of lead-calcium-tin alloy 1 was continuously formed into a ribbon by means of sheet bar caster 2. The sheet bar had a thickness of 10 mm and a width of 80 mm. As for the composition, lead-calcium-tin alloys containing 0.03 - 0.15% by weight of calcium and 0 - 1.5% by weight of tin are preferred. In the present experiment, a lead-calcium-tin alloy composed of 0.07% by weight of calcium, 0.25% of tin and a residual quantity of lead was used. At the outlet of sheet bar caster 2, the sheet bar 1 had a temperature of about 150 °C which was lower than the recrystallization temperature of the alloy. One surface of the ribbon-like sheet bar 1 was briefly ground with buff 3. Then, two sheets per one run of lead-tin alloy 4, having a thickness of 1.2, 1.0, 0.7, 0.5, 0.3 or 0.1 mm, having a width of 20 mm throughout all the runs and containing 5% by weight of tin throughout all the runs, were placed thereon in parallel with each other at an interval of 20 mm. Thereafter, the whole was passed through a continuous multi-stage rolling mill 5 equipped with three or more stages of rolls to prepare a lead alloy sheet 6 having the same width of 80 mm. Figure 2 illustrates this rolled lead alloy sheet. The surface of the rolled sheet was constituted of a thin layer of lead-tin alloy pressure-bonded onto the lead-calcium-tin alloy layer. The final thicknesses of the sheets were 2.5, 2.25, 2.0, 1.75, 1.5, 1.25, 1.0 and 0.7 mm.

Each of the lead alloy sheets thus obtained was bent so that the lead-tin alloy came outside, and the state of peeling was investigated. The results were as shown in Table 1. In the runs where the thickness of lead-tin alloy sheet was 0.7 mm or less and rolling ratio was 5 or more, a good lead alloy sheet allowing no peeling of the lead-tin alloy sheet from sheet bar was obtained.

Table 1 Bonding strengths

| Thickness of final sheet (mm) | Rolling ratio \ Thickness of lead-tin alloy layer | 0.1 mm | 0.3 mm | 0.5 mm | 0.7 mm | 1.0 mm | 1.2 mm |
|---|---|---|---|---|---|---|---|
| 0.7 | 14.4 | ○ | ○ | ○ | ○ | ○ | ○ |
| 1.0 | 10 | ○ | ○ | ○ | ○ | ○ | ○ |
| 1.25 | 8 | ○ | ○ | ○ | ○ | Δ | X |
| 1.5 | 6.7 | ○ | ○ | ○ | ○ | X | X |
| 1.75 | 5.7 | ○ | ○ | ○ | ○ | X | X |
| 2.0 | 5 | ○ | ○ | ○ | ○ | X | X |
| 2.25 | 4.44 | ○ | ○ | ○ | Δ | X | X |
| 2.5 | 4 | ○ | ○ | X | X | X | X |

Bonding strength ○ : Good

Δ : Somewhat good

X : Not good

Then, each of the sheets was subjected to an expanding process in the usual way to obtain a product shown in Figure 3 where the central area 7 was left unexpanded and the left and right areas were expanded into diamond-shaped networks 8, after which the product was cut into predetermined size and shape to obtain a grid 9 shown in Figure 4. As shown in the enlarged view of Figure 5, the section of skeletal part of this grid 9 was so constructed that a thin layer of lead-tin alloy 4 was pressure-bonded onto one side of lead-calcium-tin alloy layer 1. The lead-tin layer 4 was inclined toward the inner side of grid mesh due to the twisting force arising at the time of expanding processing.

This expanded grid was used as a positive electrode, and a pasty active material was filled thereinto in the usual way. Thus, three lots of automobile lead acid batteries A, B and C were obtained. Further, for comparison, a usual battery D was also prepared by repeating the above-mentioned procedure except that the pressure-bonding treatment using lead-tin alloy sheet was not carried out. All these batteries had a form of 12V - 55D23 (that is a battery having an Ampere-hour capacity of 55A hr at a nominal voltage of 12V when the capacity is measured over a 23 hr discharge period).

The batteries A - D were connected to a 12 Ω resistor and left standing for one week, after which they were left standing in open circuit for one week. Thereafter, they were charged at a constant voltage of 15V, and the change in current was followed. As the result, the comparative sample D necessitated one hour until it had reached the maximum current, while the samples using the grid of the invention reached the maximum current in only 5 minutes, demonstrating that the recovery characteristics after standing in super-discharged state was improved. Figure 6 illustrates one of the results.

In the example presented above, only one surface of sheet bar made of lead-calcium-tin alloy was subjected to cladding treatment using a lead-tin alloy sheet by cold rolling. Apart from such an embodiment, it is also possible, of course, to subject both surfaces of sheet bar to cladding treatment using a sheet or a foil of lead-tin alloy.

If a grid is formed by an expanding processing of a sheet-formed elementary material prepared by integrating a sheet bar of lead-calcium-tin alloy with a lead-tin alloy sheet by cold rolling as has been mentioned above, the smallness of the tendency of self-discharge or the maintenance-free characteristics of the alloy sheet bar can be sufficiently utilized, and at the same time the formation of high-resistance passive state material at the interface between the grid and the pasty active material filled therein can also be prevented. As has been mentioned above, this can be achieved by enhancing the concentration (content) of tin in the surface layer of grid to 1.5% or more. The tin content in the sheet or foil of lead-tin alloy must be in the range of 1.5% to 30%. With increasing content of tin, the cost of the sheet or foil rises. In addition, with increasing content of tin, the lead-tin alloy becomes softer, which disturbs the bonding to sheet bar at the time of cold rolling. This can cause a decrease in capacity when such a grid is set into a lead acid battery.

By keeping the alloy sheet bar at a temperature of 130 °C to 180 °C at the time of cold rolling, the alloy can be prevented from recrystallization or the formation of coarse crystal particles of the alloy. Further, by adjusting the thickness of rolled lead-tin alloy sheet or foil to 0.7 mm or less and by carrying out the rolling to such an extent that thickness of the rolled sheet becomes 1/5 time or less the thickness before rolling, the bonding strength can be enhanced. Further, when the above-mentioned conditions are fulfilled, the rolled sheet exhibits a time-hardening effect if left standing for a necessary period of time after rolling, which enhances the tensile strength of the sheet.

As for the shape of grid, diamond-shaped network produced by expanding processing is desirable from the view point of material yield. However, a shape of punched sheet produced by punching out many holes of predetermined shape from a sheet (punching processing) is also usable.

Next, as another example, there will be mentioned a case that a lead-antimony alloy having a smaller thickness than sheet bar and different in composition from sheet bar is roll-bonded onto a sheet bar of lead-calcium-tin alloy.

As the sheet bar, the same alloy as above composed of 0.07% calcium, 0.25% tin and a residual quantity of lead and having a thickness of 10 mm and a width of 80 mm was used. On the other hand, the lead-antinony alloy sheet was a ribbon-like sheet of lead-antinony alloy having a thickness of 0.3 mm and a width of 20 mm. The antimony content was 1.0% by weight.

Two lead-antimony alloy sheets were placed on the sheet bar in parallel with each other at an interval of 20 mm, and the whole was subjected to a cold rolling process in the same manner as above. The final sheet obtained by cold rolling had a lessened tendency of self-discharge storage owing to the characteristics of the sheet bar alloy itself and, in addition, it had an increased mechanical strength owing to the use of the lead antimony sheet. Further, it prevented the formation of passive state material at the interface between the pasty active material and grid surface.

According to the study of the present inventors, it is preferable to adjust the antimony content in the lead-antimony alloy sheet to 0.5 - 5% by weight. If the antimony content is lower than 0.5%, the addition of antimony cannot bring about a sufficient increase in mechanical strength and a sufficient prevention of the formation of passive state material at the interface between grid and active material. If the antimony content is higher than 5%, the product becomes poor in ductility and malleability even though mechanical strength can be enhanced. Thus, the lead-antimony alloy cannot exhibit an elongation enough to follow that of sheet bar when it is subjected to an integrating treatment together with sheet bar by the rolling, and there occur cracks and insufficient bonding.

In yet another example, a sheet or a foil of lead-silver alloy is superposed on sheet bar and pressure-bonded by rolling.

The same sheet bar as above was used. As the lead-silver alloy sheet, a sheet having a thickness of 0.3 mm and containing 0.1% by weight of silver was used. The width of the sheet and the procedure for superposing it on sheet bar were the same as above, and the whole was subjected to rolling treatment.

The results were as follows. Thus, owing to the presence of silver, the lead-silver alloy sheet brought about good ductility and malleability, prevented the formation of passive state material at the interface between sheet surface and active material and improved the corrosion resistance. Thus, in cooperation with the ability of sheet bar to prevent the self-discharge during storage, it can improve the chargeability after standing in a superdischarged state.

Preferably, the content of silver in the lead-silver alloy is 0.01 - 0.5%. If it is smaller than 0.01%, the resulting sheet cannot have sufficient corrosion resistance, ductility and malleability and the prevention of the formation of passive state material is insufficient. If the silver content is higher than 0.5%, the alloy is too high in cost. Further, such an alloy sheet has too high ductility and malleability even though corrosion resistance and preventive effect on the formation of passive state material are improved. Thus, when such a lead-silver sheet is integrated with sheet bar by rolling, the sheet slips on the surface of sheet bar so that no good pressure bonding can be achieved.

As above, the present invention can easily provide a grid for lead acid batteries excellent in the recovery characteristics after standing in a superdischarged state.

Additionally saying, according to the invention, the surface treatment necessary for improving the recovery characteristics can be applied to a limited necessary part, which enables to produce a lattice material without material loss.

**Claims**

1. A process for producing a grid (9) for use in lead acid batteries which comprises superposing a sheet or a foil (4) of a lead alloy on a sheet bar (1) composed of a lead-calcium alloy containing 0.03 to 0.15% by weight of calcium, 0 to 1.5% by weight of tin and a residual quantity of lead, said sheet or foil (4) of lead alloy having a tin concentration in the range of 1.5 to 30% by weight and a tin concentration which is higher than the tin concentration of said sheet bar (1), said sheet or foil (4) also having a thickness thinner than that of said sheet bar, and no greater than 0.7 mm, followed by integrating both materials (1, 4) by a cold rolling process at a temperature lower not higher than the recrystallisation temperature of the alloy to form an elementary sheet (6) having a thickness which is at most 1/5 of the thickness of the sheet bar (1) and the sheet or foil (4) before rolling and then subjecting the elementary sheet (6) to an expanding or punching processing to form a grid (9).

2. A process for producing a grid (9) for use in lead acid batteries according to claim 1, wherein said sheet or foil (4) of lead alloy to be superposed on said sheet bar (1) is a sheet or a foil of a lead-silver alloy containing 0.01% to 0.5% by weight of silver.

3. A process for producing a grid (9) for use in lead acid batteries according to claim 1, wherein said lead-calcium alloy constituting the sheet bar (1) is subjected to a preliminary heating at a temperature of 130°C to 180°C before it is introduced into a cold rolling mill.

4. A process for producing a grid (9) for use in lead acid batteries which comprises superposing a sheet or a foil (4) of a lead alloy having a composition different from that of the sheet bar (1) and a tin concentration higher than that of said sheet bar (1), and having a thickness thinner than that of the sheet bar, and no greater than 0.7 mm followed by integrating the two materials (1, 4) by a cold rolling process at a temperature lower not higher than the recrystallisation temperature of the alloy to form an elementary sheet (6) of which the thickness after rolling is at most 1/5 of the total thickness of the sheet bar (1) and the sheet or foil (4) before rolling, and then subjecting the elementary sheet (6) to an expanding or punching processing to form a grid (9).

5. A process for producing a grid (9) for use in lead acid batteries according to claim 4, wherein said lead-calcium alloy constituting the sheet bar (1) is subjected to a preliminary heating at a temperature of 130°C to 180°C beofre it is subjected to said cold rolling process.

6. A process for producing a grid (9) for use in lead acid batteries according to claim 4, wherein said cold rolling is carried out by use of a rolling mill (5) equipped with three or more stages of rolls in which the distance between paired rolls successively decreases from one stage to the next stage.

7. A process for producing a grid (9) for use in lead acid batteries according to claim 4, wherein said sheet or foil (4) of lead alloy to be superposed on the sheet bar (1) is a lead-tin alloy containing 1.5% to 10% by weight of tin.

8. A process for producing a grid (9) for use in lead acid batteries according to claim 4, wherein said sheet bar (1) is made of an alloy composed of 0.07% by weight of calcium, 0.25% of tin and a residual quantity of lead, and its thickness is at least three times as large as the thickness of the sheet or foil (4) of lead alloy to be superposed thereon.

9. A process for producing a grid (9) for use in lead acid batteries which comprises superposing a sheet or a foil (4) of a lead-tin alloy having a thickness no greater than 0.7 mm and containing about 5% by weight of tin on a sheet bar (1) composed of about 0.07% by weight of calcium, about 0.25% by weight of tin and a residual major quantity of lead, followed by integrating the two materials (1, 4) by a cold rolling process at a temperature not higher than the recrystallisation temperature of the alloy to form an elementary sheet (6) of which the thickness after rolling is at most 1/5 of the total thickness of the sheet bar (1) and the sheet or foil (4) before rolling, and then subjecting the elementary sheet (6) to an expanding processing to form a grid (9).

**10.** A process for producing a grid (9) for use in lead acid batteries according to claim 9, wherein said lead-calcium alloy constituting the sheet bar (1) is subjected to a preliminary heating at a temperature of 130 ° C to 180 ° C before it is introduced into a cold rolling mill.

## Patentansprüche

**1.** Verfahren zur Herstellung eines Gitters (9) für die Verwendung in Blei-Säure-Batterien, enthaltend ein Auflegen eines Blechs oder einer Folie (4) aus einer Blei-Legierung auf einen flächigen Trägerstreifen (1), der aus einer 0,03 bis 0,15 Gew.-% Kalzium, 0 bis 1,5 Gew.-% Zinn und eine restliche Menge an Blei enthaltenden Blei-Kalzium-Legierung gebildet ist, wobei das Blech oder die Folie (4) aus Blei-Legierung eine Zinn-Konzentration im Bereich von 1,5 bis 30 Gew.-% und eine höhere Zinn-Konzentration als die Zinn-Konzentration des flächigen Trägerstreifens (1) hat, wobei das Blech oder die Folie (4) weiterhin eine geringere Dicke als die des flächigen Trägerstreifens und nicht größer als 0,7 mm aufweist, gefolgt von einem Zusammenfügen beider Materialien (1, 4) durch einen Kaltwalzvorgang bei einer Temperatur nicht höher als die Rekristallisationstemperatur der Legierung zur Bildung eines einheitlichen Flächengebildes (6) mit einer höchstens 1/5 der Dicke des flächigen Trägerstreifens (1) und des Blechs oder der Folie (4) vor dem Walzen betragenden Dicke, und dann die Durchführung eines Streck- oder Stanzvorgangs an dem einheitlichen Flächengebilde (6) zur Formung eines Gitters (9).

**2.** Verfahren zur Herstellung eines Gitters (9) für die Verwendung in Blei-Säure-Batterien nach Anspruch 1, bei dem das Blech oder die Folie (4) aus Blei-Legierung zum Auflegen auf den flächigen Trägerstreifen (1) ein Blech oder eine Folie aus einer 0,01 Gew.-% bis 0,5 Gew.-% Silber enthaltenden Blei-Silber-Legierung ist.

**3.** Verfahren zur Herstellung eines Gitters (9) für die Verwendung in Blei-Säure-Batterien nach Anspruch 1, bei dem die den flächigen Trägerstreifen (1) bildende Blei-Kalzium-Legierung einer Vorerwärmung bei einer Temperatur von 130 ° C bis 180 ° C unterzogen wird, bevor sie einem Kaltwalzwerk zugeführt wird.

**4.** Verfahren zur Herstellung eines Gitters (9) für die Verwendung in Blei-Säure-Batterien, enthaltend ein Auflegen eines Blechs oder einer Folie (4) aus einer Blei-Legierung mit einer Zusammensetzung, die von der des flächigen Trägerstreifens (1) verschieden ist, und einer Zinn-Konzentration, die höher ist als die des flächigen Trägerstreifens (1), und mit einer geringeren Dicke als die des flächigen Trägerstreifens und nicht größer als 0,7 mm, gefolgt von einem Zusammenfügen der beiden Materialien (1, 4) durch einen Kaltwalzvorgang bei einer Temperatur, die nicht höher ist als die Rekristallisationstemperatur der Legierung, um ein einheitliches Flächengebilde (6) zu bilden, dessen Dicke nach dem Walzen höchstens 1/5 der Gesamtdicke des flächigen Trägerstreifens (1) und des Blechs oder der Folie (4) vor dem Walzen beträgt, und dann Durchführung eines Streck- oder Stanzvorgangs an dem einheitlichen Flächengebilde (6), um ein Gitter (9) zu formen.

**5.** Verfahren zur Herstellung eines Gitters (9) für die Verwendung in Blei-Säure-Batterien nach Anspruch 4, bei dem die den flächigen Trägerstreifen (1) bildende Blei-Kalzium-Legierung einer Vorerwärmung bei einer Temperatur von 130 ° C bis 180 ° C unterzogen wird, bevor sie dem Kaltwalzvorgang unterzogen wird.

**6.** Verfahren zur Herstellung eines Gitters (9) für die Verwendung in Blei-Säure-Batterien nach Anspruch 4, bei dem das Kaltwalzen unter Verwendung eines Walzwerks (5) durchgeführt wird, das mit drei oder mehr Stufen von Walzen ausgestattet ist, wobei die Entfernung zwischen paarweisen Walzen nacheinander von einer Stufe zur nächsten Stufe abnimmt.

**7.** Verfahren zur Herstellung eines Gitters (9) für die Verwendung in Blei-Säure-Batterien nach Anspruch 4, bei dem das Blech oder die Folie (4) aus Blei-Legierung zum Auflegen auf den flächigen Trägerstreifen (1) eine 1,5 Gew.-% bis 10 Gew.-% Zinn enthaltende Blei-Zinn-Legierung ist.

**8.** Verfahren zur Herstellung eines Gitters (9) für die Verwendung in Blei-Säure-Batterien nach Anspruch 4, bei dem der flächige Trägerstreifen (1) aus einer aus 0,07 Gew.-% Kalzium, 0,25 Gew.-% Zinn und einer restlichen Menge an Blei zusammengesetzten Legierung hergestellt ist, und dessen Dicke mindestens dreimal so groß ist wie die Dicke des Blechs oder der Folie (4) aus Blei-Legierung zum Auflegen darauf.

**9.** Verfahren zur Herstellung eines Gitters (9) für die Verwendung in Blei-Säure-Batterien, enthaltend ein Auflegen eines Blechs oder einer Folie (4) einer Blei-Zinn-Legierung mit einer Dicke nicht größer als 0,7 mm und einem Gehalt von ungefähr 5 Gew.-% Zinn auf einen aus ungefähr 0,07 Gew.-% Kalzium, ungefähr 0,25 Gew.-% Zinn und einer restlichen Hauptmenge an Blei zusammengesetzten flächigen Trägerstreifen (1), gefolgt von einem Zusammenfügen der beiden Materialien (1, 4) durch einen Kaltwalzvorgang bei einer Temperatur, die nicht höher als die Rekristallisationstemperatur der Legierung ist, zur Bildung eines einheitlichen Flächengebildes (6), dessen Dicke nach dem Walzen höchstens 1/5 der Gesamtdicke des flächigen Trägerstreifens (1) und des Blechs oder der Folie (4) vor dem Walzen beträgt, und dann Durchführung eines Streckvorgangs an dem einheitlichen Flächengebilde (6), um ein Gitter (9) zu bilden.

**10.** Verfahren zur Herstellung eines Gitters (9) für die Verwendung in Blei-Säure-Batterien nach Anspruch 9, bei dem die den flächigen Trägerstreifen (1) bildende Blei-Kalzium-Legierung einer Vorerwärmung bei einer Temperatur von 130 °C bis 180 °C unterzogen wird, bevor sie einem Kaltwalzwerk zugeführt wird.

## Revendications

**1.** Procédé de fabrication d'une grille (9) pour accumulateurs au plomb et acide, comprenant les opérations consistant à superposer un film ou feuille (4) d'un alliage de plomb sur un larget (1) composé d'un alliage plomb-calcium contenant de 0,03 à 0,15% en poids de calcium, de 0 à 1,5% en poids d'étain et, pour le reste, de plomb, ledit film ou feuille (4) ayant une concentration en étain dans la gamme de 1,5 à 30% en poids, c'est-à-dire supérieure à la concentration en étain dudit larget (1), ledit film ou feuille (4) ayant également une épaisseur inférieure à celle dudit larget et ne dépassant pas 0,7 mm, puis à rendre solidaires les deux matériaux par un traitement de laminage a froid a une température ne dépassant pas la température de recristallisation de l'alliage, pour former une feuille élémentaire (6) ayant une épaisseur qui est au maximum de 1/5 de l'épaisseur du larget (1) et du film ou feuille (4) avant le laminage, et à soumettre ensuite la feuille élémentaire (6) à un traitement de déploiement ou de poinçonnage pour former une grille (9).

**2.** Procédé de fabrication d'une grille (9) pour accumulateurs au plomb et acide selon la revendication 1, dans lequel ledit film ou feuille (4) d'alliage de plomb à superposer sur ledit larget (1) est un film ou feuille d'un alliage plomb-argent contenant de 0,01% à 0,5% en poids d'argent.

**3.** Procédé de fabrication d'une grille (9) pour accumulateurs au plomb et acide selon la revendication 1, dans lequel ledit alliage plomb-calcium constituant le larget (1) est soumis à un chauffage préliminaire à une température de 130 °C à 180 °C avant d'être introduit dans un laminoir à froid.

**4.** Procédé de fabrication d'une grille (9) pour accumulateurs au plomb et acide, comprenant les opérations consistant à superposer un film ou feuille (4) d'un alliage de plomb ayant une composition différence de celle du larget (1) et une concentration en étain supérieure à celle dudit larget (1), et ayant une épaisseur inférieure à celle du larget et ne dépassant pas 0,7 mm, puis à rendre solidaires les deux matériaux (1, 4) par un traitement de laminage à froid à une température ne dépassant pas la température de recristallisation de l'alliage, pour former une feuille élémentaire (6) dont l'épaisseur après le laminage est au maximum de 1/5 de l'épaisseur du larget (1) et du film ou feuille (4) avant le laminage, et à soumettre ensuite la feuille élémentaire (6) à un traitement de déploiement ou de poinçonnage pour former une grille (9).

**5.** Procédé de fabrication d'une grille (9) pour accumulateurs au plomb et acide selon la revendication 4, dans lequel ledit alliage plomb-calcium constituant le larget (1) est soumis à un chauffage préliminaire à une température de 130 ° C à 180 ° C avant d'être soumis audit traitement de laminage à froid.

6. Procédé de fabrication d'une grille (9) pour accumulateurs au plomb et acide selon la revendication 4, dans lequel ledit laminage à froid est effectué au moyen d'un laminoir (5) comprenant trois étages de cylindres au plus, la distance entre les cylindres appariés diminuant successivement d'un étage à l'étage suivant.

7. Procédé de fabrication d'une grille (9) pour accumulateurs au plomb et acide selon la revendication 4, dans lequel ledit film ou feuille (4) d'alliage de plomb à superposer sur le larget (1) est en un alliage plomb-étain contenant de 1,5% à 10% en poids d'étain.

8. Procédé de fabrication d'une grille (9) pour accumulateurs au plomb et acide selon la revendication 4, dans lequel ledit larget est fait d'un alliage composé de 0,07% en poids de calcium, de 0,25% d'étain et, pour le reste, de plomb, son épaisseur étant au moins triple de l'épaisseur du film ou feuille (4) d'alliage de plomb à superposer sur lui.

9. Procédé de fabrication d'une grille (9) pour accumulateurs au plomb et acide, comprenant les opérations consistant à superposer un film ou feuille (4) d'un alliage plomb-étain, ayant une épaisseur qui ne dépasse pas 0,7 mm et contenant environ 5% en poids d'étain, dur un larget (1) composé d'environ 0,07% en poids de calcium, d'environ 0,25% en poids d'étain et, pour le reste, de plomb, puis à rendre solidaires les deux matériaux (1, 4) par un traitement de laminage à froid à une température ne dépassant pas la température de recristallisation de l'alliage, pour former une feuille élémentaire (6) dont l'épaisseur après le laminage est au maximum de 1/5 de l'épaisseur totale du larget (1) et du film ou feuille (4) avant le laminage, et à soumettre ensuite la feuille élémentaire (6) à un traitement de déploiement pour former une grille (9).

10. Procédé de fabrication d'une grille (9) pour accumulateurs au plomb et acide selon la revendication 9, dans lequel ledit alliage plomb-calcium constituant le larget (1) est soumis à un chauffage préliminaire à une température de 130 ° C à 180 ° C avant d'être introduit dans un laminoir à froid.

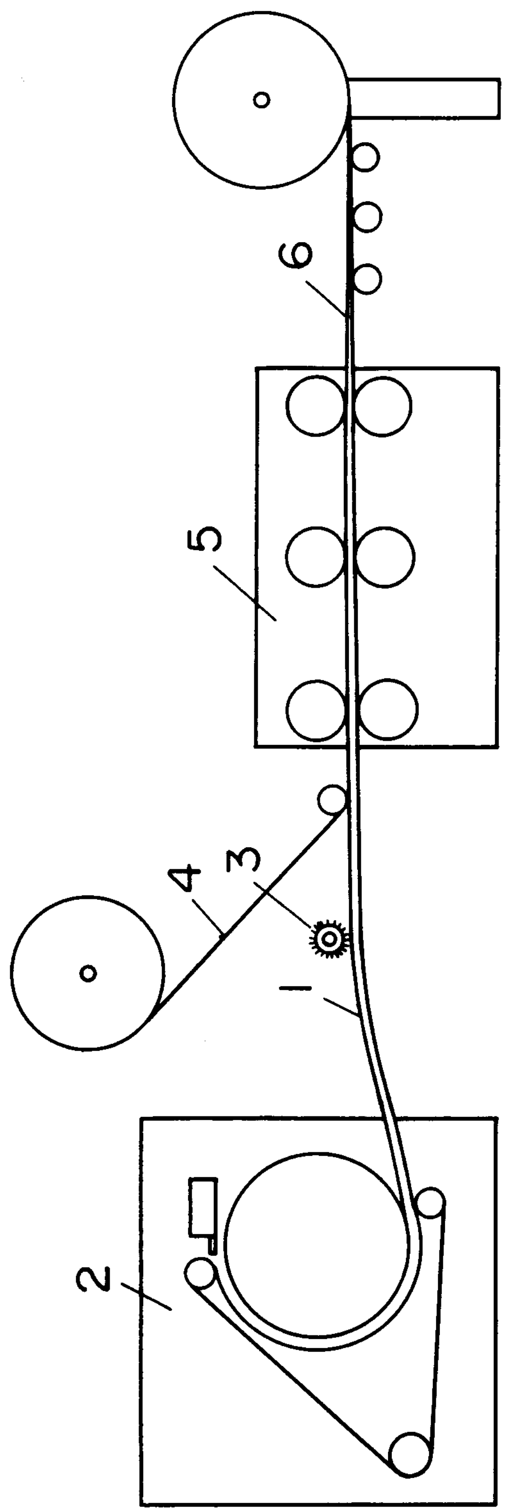


FIG. 1

F I G. 2

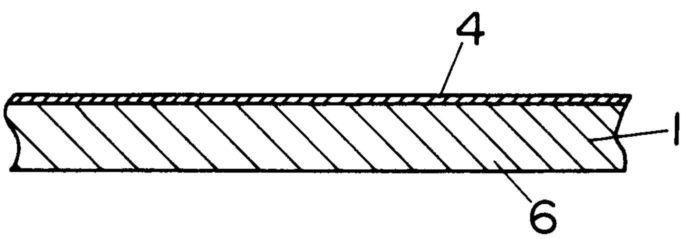


F I G. 3

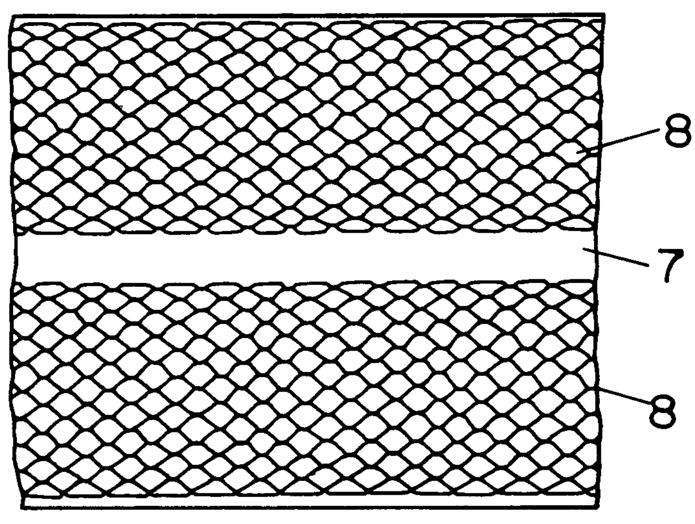

FIG. 4

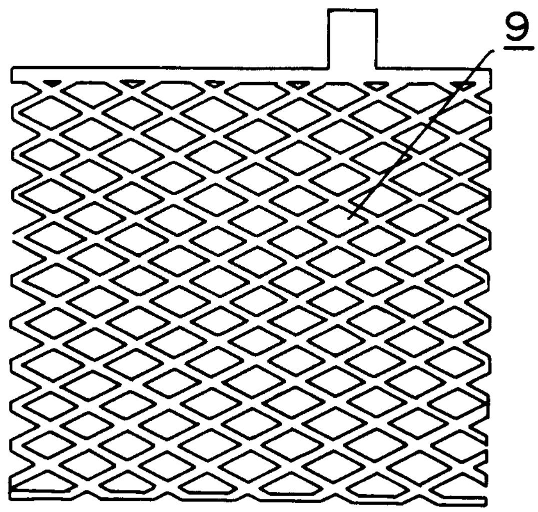


FIG. 5

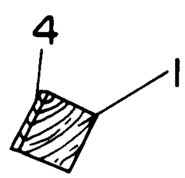

F I G. 6